# EUROPEAN PATENT APPLICATION

(11) **EP 3 085 932 A1**
(43) Date of publication of application: **26.10.2016**
(21) Application number: 16165852.1
(22) Date of filing: 18.04.2016
(51) Int. Cl.: F02D 41/02, F02D 41/40

(54) **INTERNAL COMBUSTION ENGINE**

(30) Priority: 21.04.2015 JP 2015086565
(71) Applicant: MITSUBISHI JIDOSHA KOGYO KABUSHIKI KAISHA, Tokyo 108-8410 (JP)
(72) Inventor: KANAYAMA, Kuniki, Tokyo, 108-8410 (JP); TAKEUCHI, Toshihiro, Tokyo, 108-8410 (JP); SAKAMOTO, Naoki, Tokyo, 108-8410 (JP)
(74) Representative: Vossius & Partner Patentanwälte Rechtsanwälte mbB

(57) **Abstract**

An object of the present invention is to provide an internal combustion engine which can regenerate purification means without causing problems such as noise production, abnormal temperature rise, or smoke production. A control means (30) is configured to, when the air-fuel ratio of the exhaust gas is enriched to reduce and purify the hazardous substance occluded by the purification means (23, 25), perform first combustion in which the air-fuel ratio is enriched by performing post-injection if a load of the internal combustion engine (1) is less than a set value, and perform second combustion in which the air-fuel ratio is enriched without performing post-injection if the load is greater than or equal to the set value.

## Description

The present invention relates to an internal combustion engine comprising a purification means which purifies hazardous substances such as nitrogen oxide included in exhaust gas.

As a purification means which purifies hazardous substances such as nitrogen oxide (NOx) included in exhaust gas of an internal combustion engine, for example, NOx trap catalysts have been known.

As an internal combustion engine comprising an NOx trap catalyst, there is an internal combustion engine performing combustion which enriches the air-fuel ratio of exhaust gas, when the amount of nitrogen oxide occluded by the NOx trap catalyst becomes full, thereby reducing and purifying nitrogen oxide occluded by the NOx trap catalyst and regenerating the NOx trap catalyst, for example, as disclosed in Patent Literature 1. When the regeneration is performed, it is determined by the temperature of the NOx trap catalyst whether or not the NOx trap catalyst is active and so easily regenerated. If the NOx trap catalyst is active, premix combustion is performed, and if the NOx trap catalyst is not active, diffusion combustion is performed to raise the temperature of the NOx trap catalyst.

### Citation List

### Patent Literature

### Patent Literature 1

JP 2003-65116 A

### Technical Problem

If the air-fuel ratio of exhaust gas is enriched to regenerate an NOx trap catalyst, some forms of combustion are not compatible with an engine load and the rate of revolution of an engine, and problems such as noise production, abnormal temperature rise, or smoke production, may arise.

An object of the present invention is to provide an internal combustion engine which can regenerate purification means without causing problems such as noise production, abnormal temperature rise, or smoke production.

### Solution to Problem

An internal combustion engine of claim 1 comprises a purification means and a control means. The purification means is configured to occlude a hazardous substance in exhaust gas if an air-fuel ratio of the exhaust gas is lean, and reduce and purify the occluded hazardous substance if the air-fuel ratio of the exhaust gas is rich. The control means is configured to, when the air-fuel ratio of the exhaust gas is enriched to reduce and purify the hazardous substance occluded by the purification means, perform first combustion in which the air-fuel ratio is enriched by performing post-injection if a load of the internal combustion engine is less than a set value, and perform second combustion in which the air-fuel ratio is enriched without performing post-injection if the load is greater than or equal to the set value.

The internal combustion engine of claim 2 according to claim 1 is characterized in that the control means is configured to forbid the second combustion and perform the first combustion, if a temperature of the purification means needs to be raised to be greater than or equal to a predetermined value, even if the load is greater than or equal to the set value.

The internal combustion engine of claim 3 according to claim 2 is characterized in that the control means is configured to variably set the set value in accordance with a kind of the reduced and purified hazardous substance.

The internal combustion engine of claim 4 according to any one of claims 1 to 3 is characterized in that the first combustion is combustion in which pre-injection of fuel is performed before a piston position in a combustion chamber reaches a top dead center, main injection of fuel is performed at a time when the piston position becomes near the top dead center, and post-injection of fuel is performed before the piston position reaches a bottom dead center, and the second combustion is combustion in which pre-injection of fuel is performed before the piston position reaches the top dead center, main injection of fuel is performed after the pre-injection and before the piston position reaches the top dead center, and a position of a center of gravity of a rate of heat release due to the main injection exists before the top dead center.

The internal combustion engine of claim 5 according to any one of claims 1 to 4 is characterized in that the control means is configured to perform third combustion in which the air-fuel ratio is enriched by injecting fuel after a piston position reaches a top dead center and causing ignition a predetermined period after the injection, if the internal combustion engine is stable.

The internal combustion engine of claim 6 according to claim 5 is characterized in that the control means is configured to determine whether the internal combustion engine is stable, based on at least one of the load of the internal combustion engine and a rate of revolution of the internal combustion engine.

The internal combustion engine of claim 7 according to claim 6 is characterized in that that the control means is configured to determine that the internal combustion engine is stable, if a change per unit time in the load of the internal combustion engine is less than or equal to a predetermined value, or if a change per unit time in the rate of revolution of the internal combustion engine is less than or equal to a predetermined value.

### Advantageous Effects of Invention

According to the present invention, a purification means can be regenerated without causing problems such as noise production, abnormal temperature rise, or smoke production.

The invention can be more fully understood from the following detailed description when taken in conjunction with the accompanying drawings, in which:
FIG. 1 is a diagram showing a structure of one of the embodiments of the present invention.
FIG. 2 is a diagram showing fuel injection timing of early post-injection rich combustion in the embodiment.
FIG. 3 is a diagram showing fuel injection timing of main injection diffusion rich combustion in the embodiment.
FIG. 4 is a diagram showing fuel injection timing of premix rich combustion in the embodiment.
FIG. 5 is a flowchart showing control of the embodiment.
FIG. 6 is a combustion sectional chart in the embodiment.

One of the embodiments of the present invention will be described hereinafter with reference to the accompanying drawings.

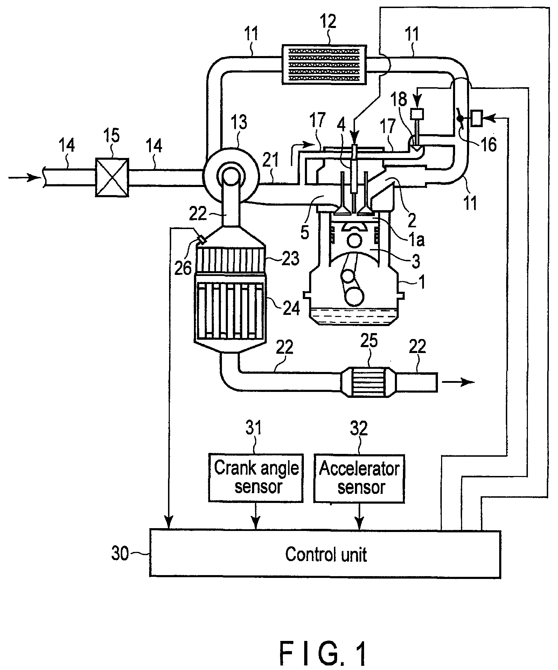

As shown in FIG. 1, a diesel engine (internal combustion engine) 1 compresses air absorbed into a combustion chamber 1a from an intake port 2 with a piston 3, performs ignition and combustion by injecting fuel into the compressed air from a fuel injector 4, and discharges exhaust gas produced by the combustion from an exhaust port 5.

The intake port 2 communicates with a supercharging-side duct of a turbocharger 13 via an intake pipe (intake path) 11 and an intercooler 12 disposed in the intake pipe 11. The turbocharger 13 absorbs air through an intake pipe (intake path) 14 and a filter 15 for dust removal disposed in the intake pipe 14, and compresses and discharges the absorbed air by turbine rotation. The discharged air passes through the intake pipe 11 and the intercooler 12, and flows into the intake port 2. In addition, in the intake pipe 11, an intake throttle valve 16 for regulating the flow of intake air is disposed at a position which is further downstream than the intercooler 12 in a direction in which intake air flows.

Exhaust gas discharged from the exhaust port 5 passes through an exhaust pipe (exhaust path) 21, a turbine-side duct of the turbocharger 13, an exhaust pipe (exhaust path) 22, an NOx trap catalyst (NTC) 23, which is a purification means disposed in the exhaust pipe 22, and a diesel particulate filter 24, and further through an NOx trap catalyst (NTC) 25, which is a purification means disposed on an end (underfloor) side of the exhaust pipe 22, and is discharged into the atmosphere. A temperature sensor 26 which detects the temperature of the NOx trap catalyst 23 is disposed near the NOx trap catalyst 23.

The NOx trap catalysts 23 and 25 occlude nitrogen oxide (NOx) and sulfur, which are hazardous substances in exhaust gas if the air-fuel ratio of the exhaust gas is lean, and reduces and purifies the occluded hazardous substances if the air-fuel ratio of the exhaust gas is stoichiometric or rich. Reduction and purification of occluded hazardous substances is called regeneration of an NOx trap catalyst. It should be noted that an ambient temperature necessary to reduce and purify sulfur is higher than that necessary to reduce and purify nitrogen oxide. Further, reduction and purification of nitrogen oxide is generally called an NOx purge, and reduction and purification of sulfur is generally called an S purge.

The diesel particulate filter 24 removes particulates included in exhaust gas.

One end of a high-pressure EGR duct (pipe) 17, which is an exhaust gas recirculation path, is connected to the exhaust pipe 21, and the other end of the high-pressure EGR duct 17 is connected to a position which is further downstream than the intake throttle valve 16 in the intake pipe 11. In addition, a high-pressure EGR valve 18 is disposed at a middle portion of the high-pressure EGR duct 17. The high-pressure EGR duct 17 guides part of exhaust gas flowing through the exhaust pipe 21 to the intake pipe 11. The high-pressure EGR valve 18 is a flow regulating valve, the degree of opening of which continuously changes from fully closed to fully open, and regulates the flow of exhaust gas by changing the degree of opening.

On the other hand, the fuel injector 4, the intake throttle valve 16, the high-pressure EGR valve 18, the temperature sensor 26, a crank angle sensor 31, and an accelerator sensor 32 are connected to a control unit 30.

The crank angle sensor 31 detects the position and the angle of rotation of a crank shaft linked to a vertical motion of the piston 3. The accelerator sensor 32 detects the degree of opening of the accelerator (the amount by which an accelerator pedal is pressed).

The control unit (control means) 30 controls the operation of the engine 1, and comprises the following means (1) and (2) as main functions particularly related to the regeneration of the NOx trap catalysts 23 and 25:
(1) a first control means which performs "combustion in a rich air-fuel ratio by early post-injection", that is, "first combustion" if a engine load L and the rate of revolution N of the engine are not stable, and performs "premix combustion in a rich air-fuel ratio", that is, "third combustion" if the engine load L and the rate of revolution N of the engine are stable, in the case where the engine load L based on a detection result of the accelerator sensor 32 is a middle or light load less than a set value L2 when the air-fuel ratio of exhaust gas is enriched to regenerate the NOx trap catalysts 23 and 25.
   The engine load L is detected from a detection result of the accelerator sensor 32. The rate of revolution N of the engine is detected from a detection result of the crank angle sensor 31. The engine load L and the rate of revolution N of the engine are stable when the change per unit time in the engine load L is less than or equal to a predetermined value and the change per unit time in the rate of revolution N of the engine is also less than or equal to a predetermined value, for example, at the time of traveling at a steady speed on a freeway.
(2) a second control means which performs "main injection diffusion combustion in a rich air-fuel ratio", that is, "second combustion" if it is unnecessary to raise the temperature of the NOx trap catalysts 23 and 25 to a high temperature greater than or equal to a predetermined value, and performs "combustion in a rich air-fuel ratio by early post-injection" if it is necessary to raise the temperature of the NOx trap catalysts 23 and 25 to a high temperature greater than or equal to the predetermined value, in the case where the engine load L is a heavy load greater than or equal to the set value L2 when the air-fuel ratio of exhaust gas is enriched to regenerate the NOx trap catalysts 23 and 25.

The predetermined value is a temperature necessary to reduce and purify sulfur of hazardous substances occluded by the NOx trap catalysts 23 and 25. That is, being unnecessary to raise the temperature of the NOx trap catalysts 23 and 25 to a high temperature greater than or equal to the predetermined value means that an object to be reduced and purified is nitrogen oxide, not sulfur.

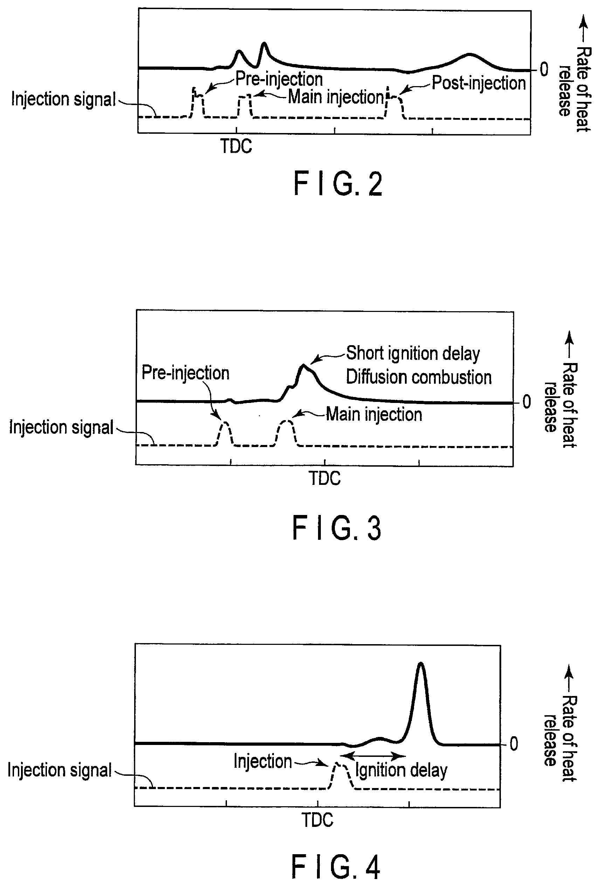

The above "combustion in a rich air-fuel ratio by early post-injection" is combustion in which with fuel injection timing shown in FIG. 2, pre-injection of fuel is performed a little before the position of the piston 3 (referred to as a piston position) reaches the top dead center (TDC), main injection of fuel is performed at a time when the piston position reaches the top dead center, and post-injection of fuel is performed at an early time (at a crank angle of 40° to 50°) when the piston position reaches the bottom dead center (BDC), whereby all the oxygen in the combustion chamber 1a is consumed. This combustion is hereinafter referred to as early post-injection rich combustion.

The early post-injection rich combustion is the most suitable to change exhaust gas into an atmosphere in a rich air-fuel ratio. However, the early post-injection rich combustion has the problem that when it is performed under a heavy engine load L, a lot of smoke is produced and the temperature of exhaust gas rises too much, and thus, components such as the turbocharger 13 are badly affected.

The above "main injection diffusion combustion in a rich air-fuel ratio" is combustion in which as shown in FIG. 3, pre-injection of fuel is performed before the piston position reaches the top dead center, main injection of fuel is performed after the pre-injection and before the piston position reaches the top dead center, and the position of the center of gravity of the rate of heat release due to the main injection exists before the top dead center. This combustion is hereinafter referred to as main injection diffusion rich injection.

The main injection diffusion rich injection has the advantage that the temperature of exhaust gas is relatively low, and on a heavy engine load L side, engine noise is not so loud. However, the main injection diffusion rich injection has the problem that when it is performed under a light engine load L, the engine noise becomes louder, and the production of smoke cannot be avoided.

The above "premix combustion in a rich air-fuel ratio" is combustion in which as shown in FIG. 4, fuel is injected after the piston position reaches the top dead center, and ignition is performed a predetermined period after the injection. This combustion is hereinafter referred to as premix rich combustion.

The premix rich combustion has the advantage of being fuel-efficient and producing an extremely small amount of smoke. However, it is hard to control an ignition delay. Especially, if the engine load L and the rate of revolution N of the engine are not stable, the ignition delay cannot be appropriately controlled, and noise may be produced, or an accidental fire may be caused.

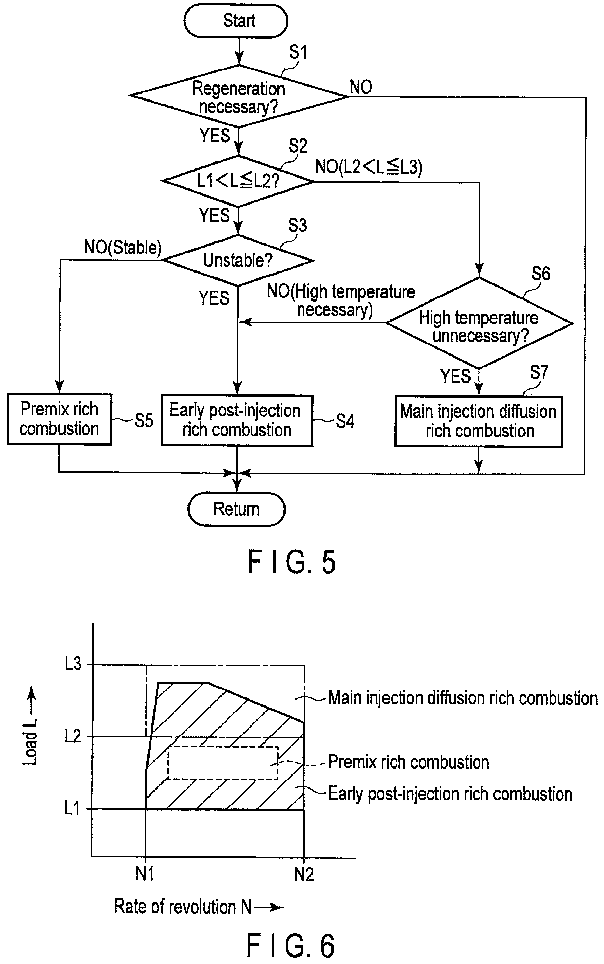

Next, control exercised by the control unit 30 will be described with reference to the flowchart of FIG. 5 and the combustion sectional chart of FIG. 6.

The control unit 30 monitors whether it is necessary to regenerate the NOx trap catalysts 23 and 25, based on an integrated running time of the engine 1, the surrounding environment, a temperature detected by the temperature sensor 26, etc. (step S1). If the regeneration is necessary (YES in step S1), the control unit 30 determines whether or not the engine load L is a middle or light load greater than or equal to a set value L1 but less than the set value L2 in a predetermined running range shown in FIG. 6, in which the rate of revolution N of the engine is greater than or equal to a set value N1 but less than a set value N2 (step S2). If the engine load L is in a middle or light load area in which it is greater than or equal to the set value L1 but less than the set value L2 (YES in step S2), the control unit 30 determines whether or not the engine load L and the rate of revolution N of the engine are stable (step S3). The middle or light load area in which the engine load L is greater than or equal to the set value L1 but less than the set value L2 is an area of a part of a diagonally shaded area shown in FIG. 6 excluding a rectangular frame of an alternate long and short dashed line.

If the engine load L and the rate of revolution N of the engine are not stable (YES in step S3), the control unit 30 performs the early post-injection rich combustion (step S4). On the other hand, if the engine load L and the rate of revolution N of the engine are stable at the time of traveling at a steady speed on a freeway, etc. (NO in step S3), the control unit 30 performs the premix rich combustion (step S5).

In this manner, the early post-injection rich combustion or the premix rich combustion is performed, whereby the air-fuel ratio of exhaust gas is enriched. The NOx trap catalysts 23 and 25 are exposed to an atmosphere in a rich air-fuel ratio, whereby nitrogen oxide occluded by the NOx trap catalysts 23 and 25 can be reduced and purified.

The premix rich combustion excels the early post-injection rich combustion in that it is fuel-efficient and produces less smoke. However, if the engine load L and the rate of revolution N of the engine are not stable, it is hard to control the premix rich combustion. Therefore, the early post-injection rich combustion is basically performed under a middle or light load, and the premix rich combustion is performed only if the engine load L and the rate of revolution N of the engine are stable. Although in a limited manner, the premix rich combustion is applied as appropriate, whereby fuel efficiency can be increased as much as possible, and the production of smoke can be prevented as much as possible.

Moreover, in a situation in which the regeneration is necessary (YES in step S1), if the engine load L is in a heavy load area in which it is greater than or equal to the set value L2 but less than a set value L3 (NO in step S2), and it is unnecessary to raise the temperature of the NOx trap catalysts 23 and 25 to a high temperature greater than or equal to a predetermined value (YES in step S6), that is, in the case of an NOx purge, in which nitrogen oxide is reduced and purified, the control unit 30 performs the main injection diffusion rich combustion (step S7). The heavy load area in which the engine load L is greater than or equal to the set value L2 but less than the set value L3 is an area enclosed by the rectangular frame indicated by the alternate long and short dashed line in FIG. 6.

The situation in which it is necessary to regenerate the NOx trap catalysts 23 and 25 occurs in an NOx purge in which nitrogen oxide is reduced and purified and an S purge in which sulfur is reduced and purified. The control unit 30 selects an NOx purge mode and an S purge mode as appropriate in accordance with the passing of time, the running situation of the engine 1, etc.

In this manner, the main injection diffusion rich combustion is performed at the time of an NOx purge, whereby the air-fuel ratio of exhaust gas is enriched, and nitrogen oxide occluded by the NOx trap catalysts 23 and 25 can be reduced and purified.

The main injection diffusion rich combustion is suitable to be performed on a heavy load side, because under a heavy load, the temperature of exhaust gas is restrained and the engine noise is not so loud, and contrarily, under a middle or light load, the engine noise becomes loud and smoke is produced. The early post-injection rich combustion is the most suitable to change exhaust gas into an atmosphere in a rich air-fuel ratio, but has the problem that under a heavy load, a lot of smoke is produced and the temperature of exhaust gas rises too much. In consideration of these points, on a heavy load side, it is the best to perform the main injection diffusion rich combustion in an NOx purge in which nitrogen oxide is reduced and purified. As a result, a regenerable running range can be more extended to the heavy load side than in the case where regeneration is performed only by the early post-injection rich combustion.

In addition, if it is necessary to raise the temperature of the NOx trap catalysts 23 and 25 to a high temperature greater than or equal to the predetermined value (NO in step S6), that is, in the case of an S purge in which sulfur is reduced and purified, the control unit 30 performs the early post-injection rich combustion (step S4). An area where the early post-injection rich combustion is performed is a diagonally shaded area in the rectangular frame of the alternate long and short dashed line in FIG. 6.

The early post-injection rich combustion may produce smoke under a heavy load. However, because the temperature of exhaust gas rises, an S purge can be reliably performed.

In addition, if a predetermined time has elapsed since the start of regeneration, or if a decrease in the amount of occluded nitrogen oxide or sulfur is detected by some means, the control unit 30 ends the regeneration of the NOx trap catalysts 23 and 25 by the above-described combustion.

As described above, the early post-injection rich combustion, the main injection diffusion rich combustion, and the premix rich combustion are selectively performed in accordance with the engine load L and the rate of revolution N of the engine. The NOx trap catalysts 23 and 25 can be thereby regenerated while exploiting the respective advantages of the early post-injection rich combustion, the main injection diffusion rich combustion, and the premix rich combustion, and further without causing problems such as noise production, abnormal temperature rise, or smoke production. Moreover, a regenerable running range extends to a heavy load side.

In the above-described embodiment, the case where the two NOx trap catalysts 23 and 25 are disposed in the exhaust pipe 22 has been described as an example, the number of NOx trap catalysts is not limited. In addition, although the case where a purification means is an NOx trap catalyst has been described as an example, other purification means which can perform reduction and purification by enriching an air-fuel ratio can also be applied.

In the present embodiment, the case where the third combustion is performed by the first control means if the engine load L and the rate of revolution N of the engine are stable has been described. However, the present embodiment is not limited to this. For example, the third combustion may be performed if the diesel engine 1 is stable, because the diesel engine 1 is also stable if the engine load L and the rate of revolution N of the engine are stable.

Moreover, the control unit 30 may determine whether or not the diesel engine 1 is stable, based on at least one of the engine load L and the rate of revolution N of the engine.

In such a structure, the engine load L and the rate of revolution N of the engine are stable, if the change per unit time in the engine load L is less than or equal to a predetermined value, or if the change per unit time in the rate of revolution N of the engine is also less than or equal to a predetermined value.

Further, the above-described embodiments and modifications have been presented by way of example only, and are not intended to limit the scope of the inventions. Indeed, these novel embodiments and modifications may be embodied in a variety of other forms; furthermore, various omissions, substitutions and changes in the form of the embodiment described herein may be made without departing from the spirit of the invention. The accompanying claims and their equivalents are intended to cover such forms or modifications as would fall within the scope and spirit of the inventions.

## Claims

1. An internal combustion engine comprising a purification means (23, 25) configured to occlude a hazardous substance in exhaust gas if an air-fuel ratio of the exhaust gas is lean, and reduce and purify the occluded hazardous substance if the air-fuel ratio of the exhaust gas is rich,
**characterized by** further comprising a control means (30) configured to, when the air-fuel ratio of the exhaust gas is enriched to reduce and purify the hazardous substance occluded by the purification means (23, 25), perform first combustion in which the air-fuel ratio is enriched by performing post-injection if a load of the internal combustion engine (1) is less than a set value, and perform second combustion in which the air-fuel ratio is enriched without performing post-injection if the load is greater than or equal to the set value.

2. The internal combustion engine of claim 1, **characterized in that** the control means (30) is configured to forbid the second combustion and perform the first combustion, if a temperature of the purification means (23, 25) needs to be raised to be greater than or equal to a predetermined value, even if the load is greater than or equal to the set value.

3. The internal combustion engine of claim 2, **characterized in that** the control means (30) is configured to variably set the set value in accordance with a kind of the reduced and purified hazardous substance.

4. The internal combustion engine of any one of claims 1 to 3, **characterized in that** the first combustion is combustion in which pre-injection of fuel is performed before a piston position in a combustion chamber (1a) reaches a top dead center, main injection of fuel is performed at a time when the piston position becomes near the top dead center, and post-injection of fuel is performed before the piston position reaches a bottom dead center, and
the second combustion is combustion in which pre-injection of fuel is performed before the piston position reaches the top dead center, main injection of fuel is performed after the pre-injection and before the piston position reaches the top dead center, and a position of a center of gravity of a rate of heat release due to the main injection exists before the top dead center.

5. The internal combustion engine of any one of claims 1 to 4, **characterized in that** the control means (30) is configured to perform third combustion in which the air-fuel ratio is enriched by injecting fuel after a piston position reaches a top dead center and causing ignition a predetermined period after the injection, if the internal combustion engine is stable.

6. The internal combustion engine of claim 5, **characterized in that** the control means is configured to determine whether the internal combustion engine is stable, based on at least one of the load of the internal combustion engine and a rate of revolution of the internal combustion engine.

7. The internal combustion engine of claim 6, **characterized in that** the control means is configured to determine that the internal combustion engine is stable, if a change per unit time in the load of the internal combustion engine is less than or equal to a predetermined value, or if a change per unit time in the rate of revolution of the internal combustion engine is less than or equal to a predetermined value.
